# FASCICULE DE BREVET EUROPEEN

(11) **EP 0 723 653 B1**
(45) Date de publication et mention de la délivrance du brevet: **23.10.2002**
(21) Numéro de dépôt: 95927787.2
(22) Date de dépôt: 16.08.1995
(51) Int. Cl.: G01N 1/32, B24B 29/00, B24B 37/04

(54) **DISPOSITIF DE POLISSAGE AVEC PORTE-ECHANTILLONS**
POLIERVORRICHTUNG MIT PROBENHALTER
POLISHING DEVICE WITH SPECIMEN-HOLDER

(30) Priorité: 17.08.1994 FR 9410079
(43) Date de publication de la demande: 31.07.1996
(73) Titulaire: COMMISSARIAT A L'ENERGIE ATOMIQUE, 75015 Paris (FR)
(72) Inventeur: MIRAGAYA, José, F-04860 Pierrevert (FR)
(74) Mandataire: Des Termes, Monique
(86) Numéro de dépôt international: FR9501085
(87) Numéro de publication internationale: WO96005497

(56) Documents cités:
- DE-U- 9 010 700
- US-A- 4 534 536

## Description

### Domaine technique

La présente invention a pour objet un dispositif de polissage d'échantillons de matériaux muni d'un porte-échantillons. Elle trouve une application, notamment, en métallographie.

### Etat de la technique

En métallographie, les analyses d'échantillons de matériaux nécessitent généralement une préparation minutieuse de l'échantillon que l'on désire analyser. Le procédé généralement utilisé pour préparer l'échantillon à analyser consiste :
- à enrober cet échantillon de matériau dans une résine pour permettre, notamment, une manipulation plus aisée de l'échantillon ;
- à démouler l'échantillon enrobé ;
- à tronçonner cet échantillon enrobé au moyen d'une tronçonneuse diamant, de façon à obtenir une surface sensiblement plane de cet échantillon ;
- à polir cette surface sensiblement plane sur un papier abrasif de façon à améliorer sa planéité ; puis
- à polir cette même surface plane sur un drap au contact d'un liquide diamanté pour parfaire le poli de l'échantillon.

Pour mettre en oeuvre les opérations de polissage de ce procédé de préparation de l'échantillon à analyser, on utilise généralement un dispositif de polissage (appelé aussi polisseuse) tel que ceux proposés par la Société BUEHLER. Plusieurs types de dispositifs de polissage sont décrits dans les fiches commerciales, distribuées par cette Société BUEHLER.

Ces dispositifs de polissage que l'on trouve dans le commerce, comprennent un plateau de polissage, une tête de polissage comportant un disque de support d'échantillons, ainsi qu'un système de commande de cette tête de polissage. Dans ces dispositifs, les échantillons enrobés de résine et tronçonnés, sont placés chacun dans un orifice du disque de support. Il est bien entendu que chacun de ces échantillons est placé dans cet orifice de façon à ce que sa surface tronçonnée soit dirigée vers le plateau de polissage.

Sur ce plateau de polissage, on peut placer différents types de papiers abrasifs (par exemple de 180, 400 ou 800, voire même 1 200 µm) ou encore un drap additionné d'un liquide diamanté. La surface tronçonnée de chaque échantillon est donc frottée sur le plateau de polissage dans le but de parfaire la planéité de cette surface.

Un tel procédé a pour inconvénient de nécessiter l'enrobage de l'échantillon à analyser avec une résine. Cet enrobage de l'échantillon est nécessaire essentiellement pour maintenir l'échantillon dans l'orifice du disque de support lors de l'opération de polissage de l'échantillon.

Des observations macrographique et micrographique peuvent alors être faites à partir de l'échantillon poli. Par contre, pour l'analyse de l'échantillon, c'est-à-dire la révélation de la microstructure de cet échantillon de matériau, il est nécessaire de procéder soit à une attaque chimique, soit à une attaque thermique. Dans la majorité des cas, qu'il s'agisse d'une attaque chimique ou d'une attaque thermique, il est nécessaire de désenrober l'échantillon car la résine d'enrobage généralement utilisée ne supporte ni les températures élevées (dans le cas d'une attaque thermique), ni les milieux trop corrosifs (dans le cas d'une attaque chimique). Aussi, le moyen le plus courant pour désenrober l'échantillon de sa résine est d'effectuer un chauffage léger permettant de faire dilater la résine pour ne récupérer que l'échantillon de matériau. Alors, seulement, une attaque chimique ou une attaque thermique peut être effectuée pour révéler la microstructure de ce matériau.

Aussi, dans les cas où l'on souhaite recueillir l'échantillon, par souci de récupération de la matière lorsqu'il s'agit de matériaux radioactifs (par exemple, le plutonium), ou bien pour réaliser une attaque thermique ou une attaque chimique comme expliqué précédemment, il est nécessaire d'utiliser des résines particulières qui peuvent être retirées par chauffage léger. Cependant, les résines qui ont servi à enrober des échantillons de matériaux radioactifs sont généralement contaminées et doivent donc être décontaminées ou stockées, ce qui entraîne des déchets ou des traitements supplémentaires.

Un autre inconvénient de ce procédé d'enrobage des échantillons est le coût de sa mise en oeuvre puisqu'elle consiste à enrober l'échantillon de résine, puis à solidifier la résine, à tronçonner l'échantillon enrobé et enfin à polir l'échantillon enrobé, ce qui nécessite un temps relativement long et donc un coût élevé.

### Exposé de l'invention

La présente invention a justement pour but de remédier aux inconvénients cités précédemment. A cette fin, elle propose un dispositif de polissage d'échantillons de matériau dans lequel les échantillons peuvent être placés sans avoir au préalable été enrobés de résine. Ce dispositif comporte un porte-échantillons pouvant s'adapter dans un orifice de n'importe quel disque de support que l'on trouve dans le commerce.

De façon plus précise, l'invention concerne un dispositif de polissage d'échantillons de matériaux ayant chacun une face sensiblement plane. Ce dispositif de polissage comporte un plateau de polissage, ainsi qu'une tête de polissage équipée d'un disque de support pourvu d'au moins un orifice. Ce dispositif de polissage se caractérise par le fait qu'il comporte en outre un porte-échantillons apte à être logé au moins en partie dans l'orifice du disque et apte à maintenir l'échantillon à polir dans une position choisie. Ce porte-échantillons comporte :
- un corps central ayant une partie inférieure comprenant des moyens de maintien et de positionnement de l'échantillon, et une partie supérieure comprenant une embase dans laquelle sont insérés des moyens de réglage de la cote de profondeur de l'échantillon dans l'orifice du disque ;
- une chemise coulissante, disposée autour du corps central et présentant extérieurement un épaulement qui divise ladite chemise en un anneau de butée de périmètre extérieur approximativement égal à celui de l'embase du corps central, et en un anneau de centrage de plus petit périmètre ajusté au périmètre de l'orifice du disque.

Selon l'invention, les moyens de réglage de la cote de profondeur de l'échantillon comportent trois vis disposées régulièrement l'une par rapport à l'autre (par exemple à 120° l'une de l'autre) et dont les têtes prennent appui sur la face arrière de l'anneau de butée de la chemise coulissante.

Selon une caractéristique de l'invention, les moyens de maintien et de positionnement de l'échantillon comportent :
- un support plan sur lequel est positionné l'échantillon ;
- un mors fixe solidaire du corps central et un mors mobile disposés parallèlement au mors fixe et qui forment un étau de serrage apte à maintenir l'échantillon dans la position choisie ; et
- au moins une vis de serrage pour mouvoir le mors mobile par rapport au mors fixe.

Selon une caractéristique de l'invention, le support d'échantillons comporte une encoche transversale en forme de V dans laquelle l'échantillon est déposé, sa face plane orientée dans une direction opposée à celle de l'encoche.

Selon une autre caractéristique de l'invention, l'un des mors des moyens de maintien et de positionnement de l'échantillon comporte une encoche axiale en forme de V dans laquelle l'échantillon est bloqué, sa face plane à polir étant orientée dans une direction perpendiculaire à celle de l'encoche.

Selon un mode de réalisation de l'invention, le porte-échantillons peut comporter un couvercle apte à être emboîté autour de la partie inférieure du corps central, de façon à assurer un positionnement de la face plane de l'échantillon parallèlement au support.

### Brève description des dessins

- La figure 1 représente un dispositif de polissage selon l'invention dans lequel on peut insérer un porte-échantillons ; et
- la figure 2 représente schématiquement le porte-échantillons qui peut être inséré dans un orifice du disque de support.

### Exposé détaillé de modes de réalisation

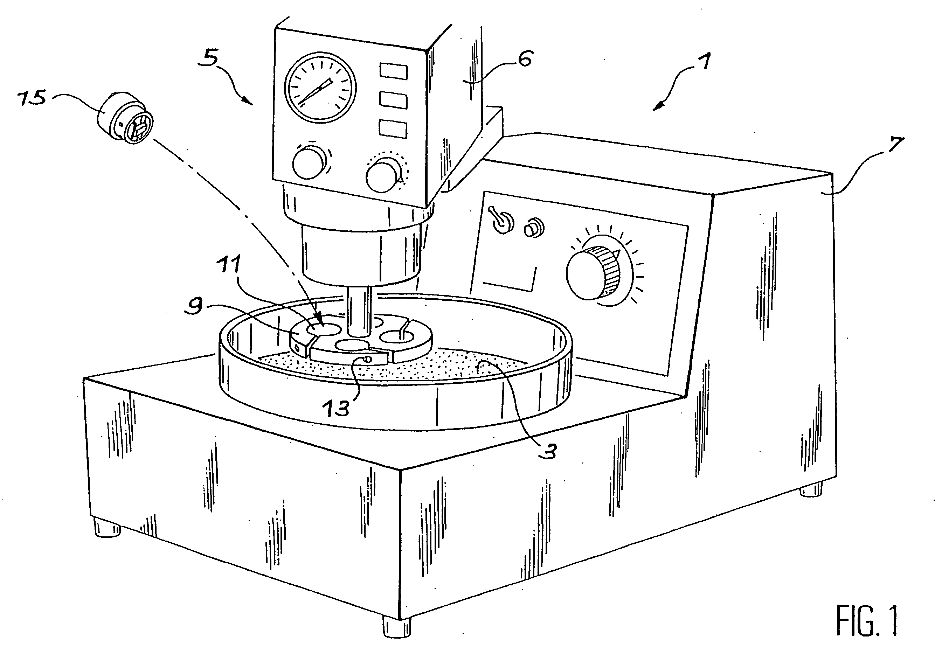

Sur la figure 1, on a représenté le dispositif de polissage selon l'invention.

Ce dispositif de polissage, référencé 1, comporte, comme dans l'art antérieur, un plateau de polissage 3 dans lequel différentes sortes de papier abrasif ou bien un drap auquel on ajoute un liquide diamanté peuvent être déposés de façon à permettre un polissage plus où moins fin de l'échantillon de matériau à étudier.

Ce dispositif de polissage 1 comporte en outre une tête de polissage 5 commandée au moins en partie par le poste de commande 7. La tête de polissage 5 comporte un système de contrôle et de mesure 6 et un disque de support 9. Ce disque de support 9 est muni d'un ou de plusieurs orifices 11. Sur la figure 1, on a représenté quatre de ces orifices 11.

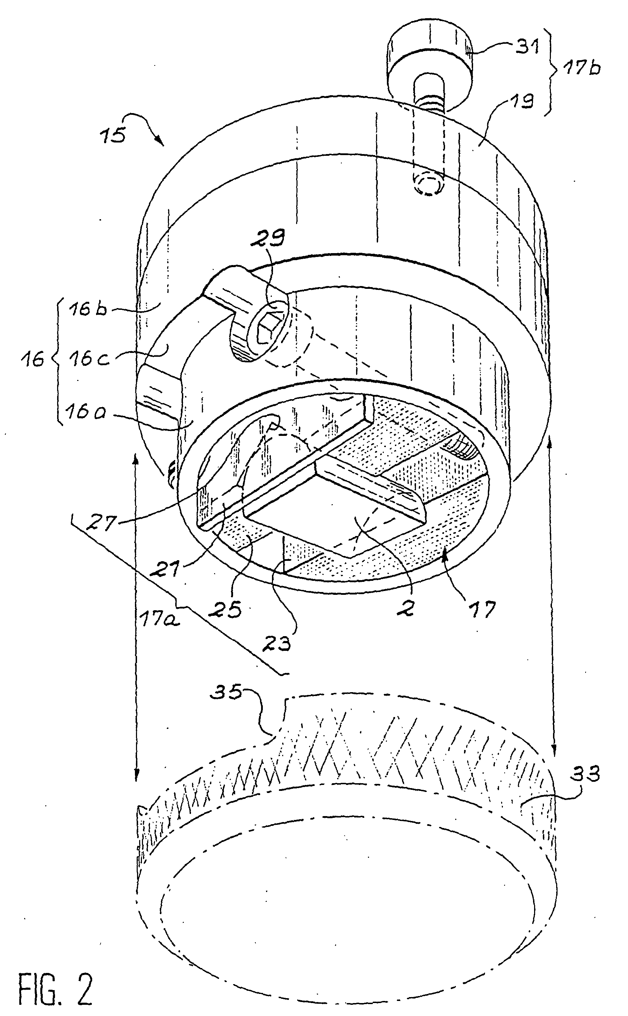

Selon l'invention, le porte-échantillons 15 est introduit dans l'un des orifices 11 du disque de support 9. De façon plus précise le porte-échantillons 15 est positionné dans l'orifice 11 au moyen d'un épaulement qui sera décrit plus précisément lors de la description de la figure 2. Lorsque le porte-échantillons 15 a été positionné de façon correcte dans l'orifice 11, un système de vis 13 assure le maintien du porte-échantillons 15 dans la position choisie.

Sur la figure 2, on a représenté le porte-échantillons 15. Ce porte-échantillons 15 comporte un corps central 17 ayant une partie inférieure 17a comprenant des moyens (décrits ultérieurement) pour positionner et maintenir l'échantillon ainsi qu'une partie supérieure 17b comprenant une embase 19 dans laquelle sont insérés des moyens pour régler la cote de profondeur de l'échantillon dans l'orifice du disque.

Le porte-échantillon comporte en outre une chemise cylindrique 16 coulissante autour du corps central 17. Cette chemise 16 présente extérieurement un épaulement 16c circulaire qui divise la chemise 16 en un anneau de butée 16b (appelé aussi cylindre supérieur) et un anneau de centrage 16a (appelé ainsi cylindre inférieur). L'anneau de butée 16b a un périmètre extérieur approximativement égal à celui de l'embase 19 du corps central. L'anneau de centrage 16a a un périmètre qui est inférieur à celui de l'anneau de butée 16b et qui est ajusté sur le périmètre de l'orifice du disque de façon à pouvoir être introduit dans cet orifice.

Dans la suite de la description, ce sont les moyens pour mettre en place l'échantillon de matériau 2 à l'intérieur du porte-échantillons 15 qui vont être décrits. On comprendra aisément que, pour déposer l'échantillon 2 dans le porte-échantillons 15, ce porte-échantillons 15 doit être retourné (par rapport à sa représentation sur la figure 2), la surface du cylindre inférieur 17a étant alors dirigée vers le haut.

Sur la figure 2, le porte-échantillons 15 a été représenté dans la position dans laquelle il est utilisé, c'est-à-dire dans sa position lorsqu'il est introduit dans l'orifice 11 du disque de support. Cependant, pour une meilleure compréhension de l'invention, on décrira la mise en place de l'échantillon 2 dans le porte-échantillons 15, comme si le porte-échantillons 15 était dans la position inverse de celle représentée dans la figure 2.

Pour assurer le positionnement de l'échantillon 2 dans le porte-échantillons 15, ce dernier comporte un corps central 17 ayant une partie inférieure 17a située à l'intérieur du cylindre inférieur 16a. Cette partie inférieure 17a consiste en un support en partie plan, référencé 25. Ce support 25 comprend, sensiblement en son milieu, une encoche 27 en forme de V, située transversalement au support 25. Lorsque l'échantillon 2 est déposé à l'intérieur du porte-échantillons 15, cette encoche 27 permet de positionner l'échantillon 2 transversalement avec sa partie non plane (c'est-à-dire qui n'est pas à polir) dans l'encoche, la surface plane à polir de cet échantillon 2 étant alors orientée vers l'extérieur du porte-échantillons 15.

Ce porte-échantillons 15 comporte en outre un mors fixe 21 et un mors mobile 23 formant tous deux un étau de serrage de l'échantillon 2. En effet, lorsque l'échantillon 2 a été positionné dans l'encoche 27, le mors mobile 23 peut être serré au moyen d'au moins une vis de serrage 29. Du fait de la vue en perspective du porte-échantillon sur la figure 2, une seule vis de serrage 29 a été représentée. Avantageusement, il y a deux de ces vis 29 de serrage, parallèles l'une à l'autre. Ces vis de serrage 29 traversent le cylindre inférieur 17a, le mors fixe 21 et le support 25 pour venir se visser chacune dans un pas de vis réalisé dans le mors mobile 23. Ainsi, en vissant ou dévissant ces vis de serrage 29, on peut rapprocher ou éloigner le mors mobile 23 par rapport au mors fixe 21 et donc serrer ou desserrer l'étau autour de l'échantillon 2.

De plus, le porte-échantillons 15 comporte a son extrémité supérieure une embase 19 de circonférence sensiblement identique à celle de l'anneau de butée 16b. Cette embase 19, qui constitue la partie supérieure 17b du corps central 17, est accolée à l'anneau de butée 16b et supporte au moins trois vis de réglage, référencées 31. Le porte-échantillon ayant été représenté en perspective sur cette figure 2, une seule de ces vis 31 apparaît sur la figure 2. Comme on le voit sur cette figure 2, la vis 31 traverse l'embase 19 et vient en appui contre l'anneau de butée 16b. Ces vis de réglage 31 permettent, lorsque le porte-échantillons 15 a été déposé dans l'orifice 11, de régler la cote de profondeur de l'ensemble du porte-échantillons 15 dans l'orifice 11 du disque en jouant sur l'espace entre l'embase 19 et l'anneau de butée 16b.

L'épaulement 16c permet de centrer le positionnement du cylindre 16a à l'intérieur de l'orifice du disque, tandis que les vis 31 permettent de régler la hauteur à laquelle doit être la base du cylindre inférieur 16a, donc la face plane de l'échantillon 2, par rapport au plateau de polissage.

Selon un mode de réalisation préféré de l'invention, on peut utiliser un couvercle 33, représenté en traits mixtes sur la figure 2, afin d'effectuer un pré-réglage de la planéité de l'échantillon 2. Ce couvercle 33 est utilisé, lorsque le porte-échantillons est dans le sens opposé à celui représenté dans la figure 2, juste après le positionnement de l'échantillon 2 dans le porte-échantillons 15. De façon plus précise, lorsque l'échantillon 2 a été positionné transversalement dans l'encoche 27 du support 25, et avant que cet échantillon 2 ne soit serré entre les mors 21 et 23, on peut positionner le couvercle 33 au-dessus du cylindre inférieur 16a. Ce couvercle 33 a effectivement une dimension adaptée au contour du cylindre inférieur 16a de façon à épouser tout juste la forme du contour de ce cylindre. Ce couvercle 33 comporte en outre une encoche 35 permettant le passage des vis 29 de serrage. L'application de ce couvercle 33 sur le cylindre inférieur 16a permet, si l'échantillon 2 n'a pas été positionné de façon à ce que sa surface plane soit tout à fait parallèle au support 25, d'orienter cette surface plane de manière à ce qu'elle soit tout à fait parallèle au support 25 et donc perpendiculaire à l'axe du porte-échantillons 15. Lorsque la planéité de la face plane de l'échantillon 2 est assurée, on peut serrer le mors 23 vers le mors 21 de façon à maintenir l'échantillon 2 dans la position choisie et, ensuite, retirer le couvercle 33. Le porte-échantillons 15 peut alors être retourné sans risque que l'échantillon 2 ne tombe, puis introduit dans un orifice du disque de support du dispositif de polissage.

Dans la description qui vient d'être faite, l'échantillon était un échantillon de type cylindrique coupé longitudinalement. Ce porte-échantillons permet cependant d'examiner des échantillons d'autres formes que celle de l'échantillon montré en figure 2. Par exemple, il est possible d'examiner la base d'un échantillon cylindrique : dans ce cas, l'un des mors (ou même les deux) peut comporter une encoche en V orientée axialement de façon à permettre un meilleur maintien de l'échantillon entre les deux mors.

Le porte-échantillon de l'invention permet donc de maintenir des échantillons de n'importe quelles dimensions, réalisés dans toutes sortes de matériaux, sans investissement coûteux de matériel puisqu'il peut s'introduire dans tous les types de polisseuses connues.

On a compris bien évidemment que ce. dispositif permet d'analyser des échantillons de matériaux sans nécessiter aucun enrobage dans de la résine. L'utilisation d'un tel dispositif permet donc de diminuer la quantité de déchets, notamment lorsque ces déchets sont radioactifs, puisqu'alors seuls les échantillons doivent être récupérés en vue d'être stockés.

En outre, l'analyse par attaque chimique ou attaque thermique peut être réalisée sur l'échantillon directement après polissage de cet échantillon, sans nécessiter aucune opération de désenrobage de la résine. Aussi, outre les économies faites sur le temps de mise en oeuvre du procédé, l'invention permet, par rapport au procédé actuellement utilisé, d'effectuer des économies sur les consommables métallographiques, tels que la résine, les meules de tronçonnage, le papier abrasif, etc.

## Revendications

1. Dispositif de polissage d'échantillons (2) de matériaux ayant chacun une face sensiblement plane, comportant un plateau de polissage (3) et une tête de polissage (5) équipée d'un disque de support (9) pourvu d'au moins un orifice (11), **caractérisé en ce qu'**il comporte en outre un porte-échantillons (15) apte à être logé au moins en partie dans l'orifice (11) du disque et à maintenir l'échantillon dans une position choisie, ce porte-échantillon comprenant :
- un corps central (17) ayant une partie inférieure (17a) comprenant des moyens (21, 23, 25, 27, 29) de maintien et de positionnement de l'échantillon, et une partie supérieure (17b) comprenant une embase (19) dans laquelle sont insérés dès moyens (31) de réglage de la cote de profondeur de l'échantillon dans l'orifice du disque ;
- une chemise coulissante (16), disposée autour du corps central (17) et présentant extérieurement un épaulement (16c) qui divise ladite chemise en un anneau de butée (16b) de périmètre extérieure approximativement égal à celui de l'embase du corps central, et en un anneau de centrage (16a) de plus petit périmètre ajuste au périmètre de l'orifice du disque.

2. Dispositif de polissage selon la revendication 1, **caractérisé en ce que** les moyens de maintien et de positionnement de l'échantillon comportent :
- un support plan (25) sur lequel est disposé l'échantillon ;
- un mors fixe (21) solidaire du corps central et un mors mobile (23) disposés parallèlement au mors fixe et qui forment un étau de serrage apte à maintenir l'échantillon dans la position choisie ; et
- au moins une vis de serrage (29) pour mouvoir le mors mobile par rapport au mors fixe.

3. Dispositif de polissage selon la revendication 1 ou 2, **caractérisé en ce que** les moyens de réglage de la cote de profondeur de l'échantillon comportent au moins trois vis disposées régulièrement l'une par rapport à l'autre et prenant appui sur l'anneau de butée.

4. Dispositif de polissage selon la revendication 2 ou 3, **caractérisé en ce que** le support comporte une encoche transversale (27) en forme de V, dans laquelle l'échantillon est positionné, sa face plane dirigée à l'opposé de l'encoche.

5. Dispositif de polissage selon l'une quelconque des revendications 2 à 4, **caractérisé en ce que** l'un au moins des mors des moyens de maintien et de positionnement comporte une encoche axiale en forme de V dans laquelle l'échantillon est bloqué, la face plane de l'échantillon étant dirigée dans une direction perpendiculaire à celle de l'encoche.

6. Dispositif de polissage selon l'une quelconque des revendications 3 à 5, **caractérisé en ce que** le porte-échantillons comporte un couvercle (33) apte à être emboîté autour de la partie inférieure du corps central pour assurer un positionnement de la face plane de l'échantillon parallèle au support.

## Patentansprüche

1. Poliervorrichtung für Materialproben (2) mit jeweils einer im Wesentlichen ebenen Fläche, eine Polierplatte (3) und einen Polierkopf (5) umfassend, ausgerüstet mit einer Trägerscheibe (9), versehen mit wenigstens einer Öffnung (11),
**dadurch gekennzeichnet,**
**dass** sie außerdem einen Probenhalter (15) enthält, der wenigstens teilweise in der Öffnung (11) der Scheibe sitzt und die Probe in einer gewählten Stellung festhält, wobei dieser Probenhalter umfasst:
- ein Zentralgehäuse (17) mit einem unteren Teil (17a), der Einrichtungen (21, 23, 25, 27, 29) zum Festhalten und Positionieren der Probe enthält, und einem oberen Teil (17b), der einen Sockel (19) mit Einrichtungen (31) zum Einstellen des Maßes der Tiefe der Probe in der Öffnung der Scheibe umfasst;
- einen Gleitmantel (16), um das Zentralgehäuse (17) herum angeordnet, der außen eine Schulter (16c) aufweist, die den genannten Mantel unterteilt in einen Anschlagring (16b) mit einem Außendurchmesser, der ungefähr gleich dem des Sockels des Zentralgehäuses ist, und einen Zentrierungsring (16a) mit kleinerem Durchmesser, angepasst an den Umfang der Öffnung der Scheibe.

2. Poliervorrichtung nach Anspruch 1, **dadurch gekennzeichnet, dass** die genannten Festhalte- und Positioniereinrichtungen der Probe umfassen:
- einen ebenen Träger (25), auf dem die Probe angeordnet wird;
- einen festen Backen (21), fest verbunden mit dem Zentralgehäuse, und einen beweglichen Backen (23), der parallel zum festen Backen angeordnet ist und mit diesem zusammen einen Spannschraubstock bildet, der fähig ist, die Probe in der gewählten Stellung festzuhalten; und
- wenigstens eine Spannschraube (29), um den beweglichen Backen in Bezug auf den festen Backen zu bewegen.

3. Poliervorrichtung nach Anspruch 1 oder 2, **dadurch gekennzeichnet, dass** die Einrichtungen zum Einstellen des Maßes der Tiefe der Probe wenigstens drei Schrauben umfassen, die in Bezug aufeinander gleichmäßig angeordnet sind und sich auf dem Anschlagring abstützen.

4. Poliervorrichtung nach Anspruch 2 oder 3, **dadurch gekennzeichnet, dass** der Träger eine V-förmige Querkerbe (27) aufweist, in der die Probe positioniert wird, wobei ihre ebene Fläche von der Kerbe abgewandt ist.

5. Poliervorrichtung nach einem der Ansprüche 2 bis 4, **dadurch gekennzeichnet, dass** wenigstens einer der Backen der genannten Festhalte- und Positioniereinrichtungen eine V-förmige Axialkerbe aufweist, in der die Probe blockiert wird, wobei die ebene Fläche der Probe in eine Richtung weist, die zu derjenigen der Kerbe senkrecht ist.

6. Poliervorrichtung nach einem der Ansprüche 3 bis 5, **dadurch gekennzeichnet, dass** der Probenhalter einen Deckel (33) umfasst, der auf den unteren Teil des Zentralgehäuses geschoben werden kann, um eine zu dem Träger parallele Positionierung der ebenen Fläche der Probe sicherzustellen.

## Claims

1. Device for polishing samples (2) of materials, each having a substantially planar face, incorporating a polishing table (3) and a polishing head (5) equipped with a support disk (9) provided with at least one orifice (11), **characterized in that** it also has a sample holder (15), which can at least partly be housed in the orifice (11) of the disk and maintains the sample in a chosen position, said sample holder comprising:
- a central body (17) having a lower portion (17a) with means (21, 23, 25, 27, 29) for holding and positioning the sample, and an upper portion (17b) having a base (19) in which are inserted means (31) for regulating the depth reading of the sample in the disk orifice,
- a sliding jacket (16) placed around the central body (17) and externally provided with a shoulder (16c), which subdivides said jacket into a stop ring (16b) having an external perimeter approximately equal to that of the base of the central body, and a smaller perimeter centring ring (16a) adjusted to the perimeter of the disk orifice.

2. Polishing device according to claim 1, **characterized in that** the means for holding and positioning the sample comprise a planar support (25) on which is placed the sample, a fixed jaw (21) integral with the central body and a mobile jaw (23) arranged parallel to the fixed jaw and which together form a vice able to maintain the sample in the chosen position and at least one tightening screw (29) for moving the mobile jaw with respect to the fixed jaw.

3. Polishing device according to claim 1 or 2, **characterized in that** the means for regulating the depth reading of the sample have at least three screws arranged regularly to one another and bearing on the stop ring.

4. Polishing device according to claim 2 or 3, **characterized in that** the support has a V-shaped transverse notch (27) in which the sample is positioned, its planar face being directed counter to the notch.

5. Polishing device according to any one of the claims 2 to 4, **characterized in that** at least one of the jaws of the holding and positioning means has a V-shaped axial notch in which the sample is locked, the planar face of the sample being directed in a direction perpendicular to that of the notch.

6. Polishing device according to any one of the claims 3 to 5, **characterized in that** the sample holder has a cover (33) which can be fitted around the lower portion of the central body in order to ensure a positioning of the planar face of the sample parallel to the support.
